# EUROPÄISCHE PATENTSCHRIFT

(11) **EP 4 282 564 B1**
(45) Veröffentlichungstag und Bekanntmachung des Hinweises auf die Patenterteilung: **25.11.2026**
(21) Anmeldenummer: 22175019.3
(22) Anmeldetag: 24.05.2022
(51) Int. Cl.: B23C 5/06, B23C 5/22

(54) **FRÄSWERKZEUG**
MILLING TOOL
OUTIL DE FRAISAGE

(43) Veröffentlichungstag der Anmeldung: 29.11.2023
(73) Patentinhaber: CERATIZIT Austria Gesellschaft m.b.H., 6600 Reutte (AT)
(72) Erfinder: BURTSCHER, Peter, 6600 Reutte (AT); FRIEDL, Roland, 6600 Reutte (AT)
(74) Vertreter: Ciesla, Dirk

(56) Entgegenhaltungen:
- WO-A1-2021/019528
- WO-A1-90/05608
- US-A1- 2002 081 168
- US-B1- 7 300 231

## Beschreibung

Die vorliegende Erfindung betrifft ein Fräswerkzeug nach dem Oberbegriff von Anspruch 1. Ein solches Fräswerkzeug ist in US 7,300,231 B1 beschrieben.

Insbesondere bei der Bearbeitung von metallischen Werkstoffen, aber z.B. auch bei der Bearbeitung von Kompositwerkstoffen, kommen häufig Fräswerkzeuge zum Einsatz, die einen Fräswerkzeuggrundkörper haben, an dessen freiem Ende auswechselbare Schneideinsätze angeordnet sind, die die mit dem zu bearbeitenden Werkstoff in Eingriff gelangenden Schneiden aufweisen. Dabei ist der Fräswerkzeuggrundkörper typischerweise aus einem relativ zähen Material, wie z.B. Werkzeugstahl, gefertigt und die auswechselbaren Schneideinsätze sind aus einem deutlich härteren Material, wie z.B. Hartmetall (cemented carbide), Cermet oder einer Schneidkeramik gebildet. Je nach zu bearbeitendem Werkstoff kommen teilweise auch hochharte Schneidstoffe wie polykristalliner Diamant (PKD) oder kubisches Bornitrid (cubic boron nitride, CBN) für den Schneidenbereich zum Einsatz.

Die auswechselbaren Schneideinsätze sind typischerweise in Sitzen gehalten, die an dem Außenumfang des Fräswerkzeuggrundkörpers ausgebildet sind. Für eine reversible Befestigung der Schneideinsätze kommen teilweise Befestigungsschrauben zu Anwendung, die eine Durchgangsbohrung in dem jeweiligen Schneideinsatz durchgreifen, oder aber auch sogenannte Klemmpratzen oder Klemmkeile die kraftschlüssig und zum Teil auch formschlüssig auf eine Seite des jeweiligen Schneideinsatzes einwirken.

Insbesondere um z.B. eine Verstellbarkeit der Position des Schneideinsatzes zu ermöglichen, kommen teilweise auch Lösungen zum Einsatz, bei denen der Schneideinsatz nicht direkt an einem Sitz an dem Fräswerkzeuggrundkörper befestigt ist, sondern an einem Schneideinsatzsitz an einer auswechselbaren Kassette, welche dann an dem Fräswerkzeuggrundkörper befestigt ist. In einer solchen Ausgestaltung liegt der auswechselbare Schneideinsatz üblicherweise mit zumindest zwei Seitenflächen an entsprechenden seitlichen Anlageflächen der Kassette an und stützt sich oftmals auch mit seiner Unterseite an der Kassette ab.

Insbesondere bei Fräswerkzeugen für die Schwerzerspanung kann es vorkommen, dass im Betrieb ein Schneideinsatz aufgrund der großen wirkenden Kräfte zu Bruch geht. In diesem Fall kommt es oftmals auch zu einer Beschädigung der angrenzenden Bereiche des Plattensitzes und/oder einer Kassette, in der der Schneideinsatz gehalten ist, was mit relativ hohen Kosten verbunden ist. Ferner ist es bei den bekannten Fräswerkzeugen in den meisten Fällen nicht möglich, verschiedene Arten von auswechselbaren Schneideinsätzen zu verwenden bzw. eine Umrüstung ist nur mit sehr hohem Aufwand möglich.

Es ist Aufgabe der vorliegenden Erfindung, ein verbessertes Fräswerkzeug bereitzustellen, bei dem die Kosten im Falle des Bruches eines auswechselbaren Schneideinsatzes reduziert sind und das eine einfache Umrüstung auf verschiedene auswechselbare Schneideinsätze ermöglicht.

Die Aufgabe wird durch ein Fräswerkzeug nach Anspruch 1 gelöst. Vorteilhafte Weiterbildungen sind in den abhängigen Ansprüchen angegeben.

Aufgrund der getrennt voneinander vorgesehenen ersten, zweiten und dritten Stützkörper, die jeweils über zugeordnete Befestigungselemente reversibel an dem Fräswerkzeuggrundkörper befestigt sind, kann im Fall eines Bruchs eines auswechselbaren Schneideinsatzes gezielt nur der Bereich ausgewechselt werden, der ebenfalls beschädigt wurde, z.B. nur einer der Stützkörper. Ferner kann der Sitz durch Austauschen von einem oder mehreren der Stützkörper in besonders einfacher Weise zur Aufnahme eines auswechselbaren Schneideinsatzes mit einer anderen Form umgerüstet werden.

Gemäß einer Weiterbildung sind das erste, das zweite und das dritte Befestigungselement jeweils als Schrauben ausgebildet. In diesem Fall ist eine besonders einfache Handhabung ermöglicht.

Gemäß einer Weiterbildung sind das erste, das zweite und das dritte Befestigungselement jeweils mit einem Eingriffsbereich für ein Schraubwerkzeug ausgebildet und die Eingriffsbereiche sind für einen Eingriff mit demselben Schraubwerkzeug ausgelegt. In diesem Fall ist das Fräswerkzeug besonders nutzerfreundlich ausgelegt und muss keine große Anzahl verschiedener Schraubwerkzeuge vorgehalten werden.

Im Bereich des Sitzes ist ein Klemmkeil zum Ausüben einer Klemmkraft auf eine Oberseite des Schneideinsatzes angeordnet. Somit wird eine besonders robuste und zuverlässige Befestigung des Schneideinsatzes an dem Fräswerkzeuggrundkörper gewährleistet.

Gemäß einer Weiterbildung ist der Klemmkeil über ein Schraubelement mit dem Fräswerkzeuggrundkörper verbunden. In diesem Fall ist eine besonders einfache und nutzerfreundliche Bedienung zum Auswechseln des Schneideinsatzes ermöglicht. Bevorzugt kann das Schraubelement einen Eingriffsbereich für ein Schraubwerkzeug aufweisen, der eine Betätigung mit demselben Schraubwerkzeug ermöglicht, das auch für die jeweiligen Befestigungselemente der Stützkörper verwendet wird.

Gemäß einer Weiterbildung hat das Schraubelement einen ersten Gewindebereich, der mit einem Gewindeabschnitt in dem Klemmkeil zusammenwirkt, und einen zweiten Gewindebereich, der mit einem Gewindeabschnitt in dem Fräswerkzeuggrundkörper zusammenwirkt. In diesem Fall ist eine besonders einfache Betätigung des Klemmkeils über das Schraubelement ermöglicht.

Gemäß einer Weiterbildung sind der erste Gewindebereich und der zweite Gewindebereich des Schraubelements in dem Drehsinn des Gewindes und/oder der Gewindesteigung voneinander verschieden. In diesem Fall wird in besonders einfacher und zuverlässiger Weise eine Bewegung des Klemmkeils zum Befestigen und Lösen des auswechselbaren Schneideinsatzes bereitgestellt.

Gemäß einer Weiterbildung stützt sich der dritte Stützkörper jeweils seitlich an dem ersten Stützkörper und an dem zweiten Stützkörper ab. In diesem Fall ist einerseits ein besonders einfaches Auswechseln des dritten Stützkörpers ermöglicht und andererseits auch eine besonders kompakte und robuste Befestigung des Schneideinsatzes realisiert.

Gemäß einer Weiterbildung ist das dritte Befestigungselement derart schräg angeordnet, dass der dritte Stützkörper in Richtung des ersten Stützkörpers und in Richtung des zweiten Stützkörpers gespannt ist. In diesem Fall ist eine gute Zugänglichkeit des dritten Befestigungselements gegeben und der Schneideinsatz wird besonders robust und zuverlässig abgestützt.

Gemäß einer Weiterbildung sind ein erster Satz aus einem ersten Stützkörper, einem zweiten Stützkörper und einem dritten Stützkörper und zumindest ein weiterer, von dem ersten Satz verschiedener Satz aus einem ersten Stützkörper, einem zweiten Stützkörper und einem dritten Stützkörper zur Anpassung des Sitzes zur Aufnahme verschiedener Schneideinsätze vorgesehen. Dabei können z.B. sämtliche Stützkörper aus dem weiteren Satz von den entsprechenden Stützkörpern in dem ersten Satz verschieden sein oder aber z.B. auch nur ein oder zwei der Stützkörper von den entsprechenden Stützkörpern in dem ersten Satz verschieden sein. Wenn der erste Satz von Stützkörpern und der zumindest eine weitere Satz von Stützkörpern bereitgestellt sind, kann in besonders einfacher und schneller Weise eine Umrüstung auf verschiedene Arten von auswechselbaren Schneideinsätzen erfolgen.

Gemäß einer Weiterbildung sind an dem zweiten Ende eine Mehrzahl von über den Umfang des Fräswerkzeuggrundkörpers verteilten Sitzen zur Aufnahme von auswechselbaren Schneideinsätzen vorgesehen. Die Sitze können dabei insbesondere alle in derselben Art ausgebildet sein. Bevorzugt können die Sitze zur Aufnahme von identischen Schneideinsätzen und mit derselben Orientierung ausgebildet sein. In diesen Fällen wird ein besonders effizienter Zerspanungsprozess ermöglicht.

Wenn der erste Stützkörper und der zweite Stützkörper identisch ausgebildet sind, ist eine besonders einfache und nutzerfreundliche Handhabung bereitgestellt und Herstellkosten können niedrig gehalten werden.

Gemäß einer Weiterbildung ist der Sitz an dem Fräswerkzeuggrundkörper vollständig durch Wälzfräsen aus einer Bearbeitungsrichtung erzeugt. In diesem Fall ist eine besonders kostengünstige Herstellung ermöglicht.

Weitere Vorteile und Zweckmäßigkeiten der Erfindung ergeben sich anhand der nachfolgenden Beschreibung eines Ausführungsbeispiels unter Bezugnahme auf die beigefügten Figuren.

Von den Figuren zeigen:
- Fig. 1:: eine perspektivische Darstellung eines Fräswerkzeugs mit einer Mehrzahl von an entsprechenden Plattensitzen befestigten auswechselbaren Schneideinsätzen;
- Fig. 2:: eine schematische stirnseitige Ansicht des Fräswerkzeugs von Fig. 1;
- Fig. 3:: eine teilgeschnittene Seitenansicht des Fräswerkzeugs von Fig. 1;
- Fig. 4:: eine vergrößerte Detaildarstellung im Bereich eines Sitzes an dem Fräswerkzeuggrundkörper ohne daran befestigten auswechselbaren Schneideinsatz;
- Fig. 5:: eine Fig. 4 entsprechende Darstellung, jedoch ohne dritten Stützkörper;
- Fig. 6:: eine den Fig. 4 und Fig. 5 entsprechende Darstellung, wobei im Bereich des Sitzes nur noch der erste Stützkörper und der zweite Stützkörper angeordnet sind;
- Fig. 7:: eine schematische perspektivische Detaildarstellung im Bereich des Sitzes ohne Stützkörper, Befestigungsmittel, Schneideinsatz und Klemmkeil;
- Fig. 8:: eine schematische Darstellung der Anordnung des ersten, zweiten und dritten Stützkörpers bei der Ausführungsform;
- Fig. 9:: eine schematische Seitenansicht im Bereich eines Sitzes ohne daran befestigten Schneideinsatz mit im Wesentlichen radialer Blickrichtung bezüglich einer Rotationsachse des Fräswerkzeugs;
- Fig. 10:: eine schematische Stirnansicht im Bereich eines Sitzes ohne daran befestigten Schneideinsatz mit im Wesentlichen axialer Blickrichtung bezüglich einer Rotationsachse des Fräswerkzeugs;
- Fig. 11:: eine schematische Darstellung eines weiteren Satzes aus einem ersten, einem zweiten und einem dritten Stützkörper zur Anpassung des Sitzes an einen anderen Schneideinsatz; und
- Fig. 12:: eine schematische Darstellung noch eines weiteren Satzes aus einem ersten, einem zweiten und einem dritten Stützkörper zur Anpassung des Sitzes an noch einen anderen Schneideinsatz.

### AUSFÜHRUNGSFORM

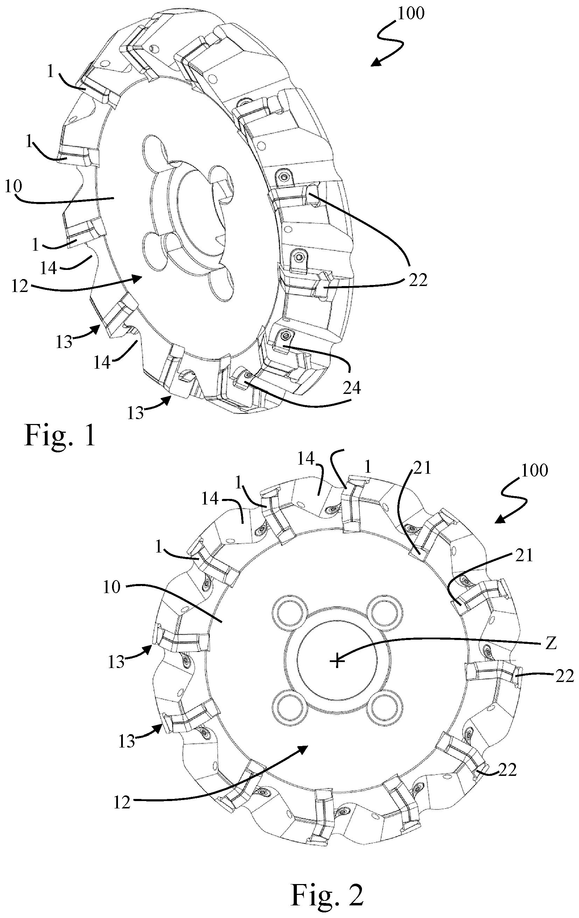

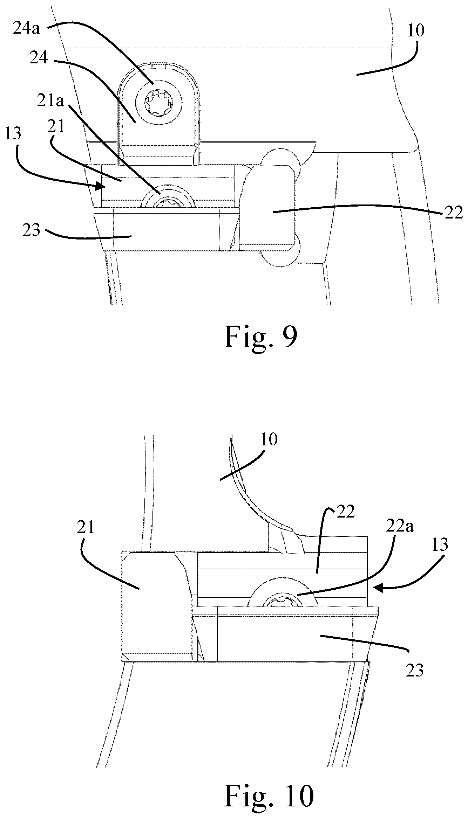

Eine Ausführungsform des Fräswerkzeugs wird im Folgenden unter Bezug auf die Fig. 1 bis Fig. 10 eingehender beschrieben.

Wie insbesondere in den Fig. 1 bis Fig. 3 zu sehen ist, ist das Fräswerkzeug 100 bei der dargestellten Ausführungsform als ein sogenannter Aufsteckfräser ausgebildet und weist eine entsprechende Schnittstelle zur Verbindung mit dem Antrieb einer Werkzeugmaschine auf. Obwohl in dem konkreten Ausführungsbeispiel eine solche Ausgestaltung als Aufsteckfräser gezeigt ist, kann das Fräswerkzeug 100 auch mit einer anderen üblichen Schnittstelle versehen sein.

Das Fräswerkzeug 100 hat einen Fräswerkzeuggrundkörper 10, der z.B. aus einem Werkzeugstahl gebildet sein kann. Der Fräswerkzeuggrundkörper 10 hat ein erstes Ende 11, das mit der Schnittstelle 11a zur Verbindung mit dem Antrieb einer Werkzeugmaschine versehen ist, und ein freies zweites Ende 12. An dem freien zweiten Ende 12 des Fräswerkzeuggrundkörpers 10 ist eine Mehrzahl von Sitzen 13 zur Aufnahme von auswechselbaren Schneideinsätzen 1 ausgebildet.

Obwohl bei dem konkret dargestellten Ausführungsbeispiel insgesamt zwölf solche Sitze 13 vorgesehen sind, können je nach Anwendungszweck auch weniger als zwölf Sitze 13 oder mehr als zwölf Sitze 13 vorgesehen werden. Die Sitze 13 sind an dem freien zweiten Ende 12 über den Außenumfang des Fräswerkzeuggrundkörpers 10 derart verteilt angeordnet, dass an diesen angeordnete Schneideinsätze 1 jeweils mit einem aktiven Schneidkantenbereich sowohl in axialer Richtung als auch in radialer Richtung bezüglich einer Rotationsachse Z des Fräswerkzeugs 100 von dem Fräswerkzeuggrundkörper 10 vorstehen. Bei dem dargestellten Ausführungsbeispiel sind die Sitze 13 im Wesentlichen gleichmäßig über den Umfang verteilt angeordnet und zur Aufnahme von identischen Schneideinsätzen 1 ausgebildet.

Angrenzend an die Sitze 13 sind in dem Fräswerkzeuggrundkörper 10 Spannuten 14 ausgebildet, die einem Abtransport von erzeugten Spänen beim Betrieb des Fräswerkzeugs 100 dienen.

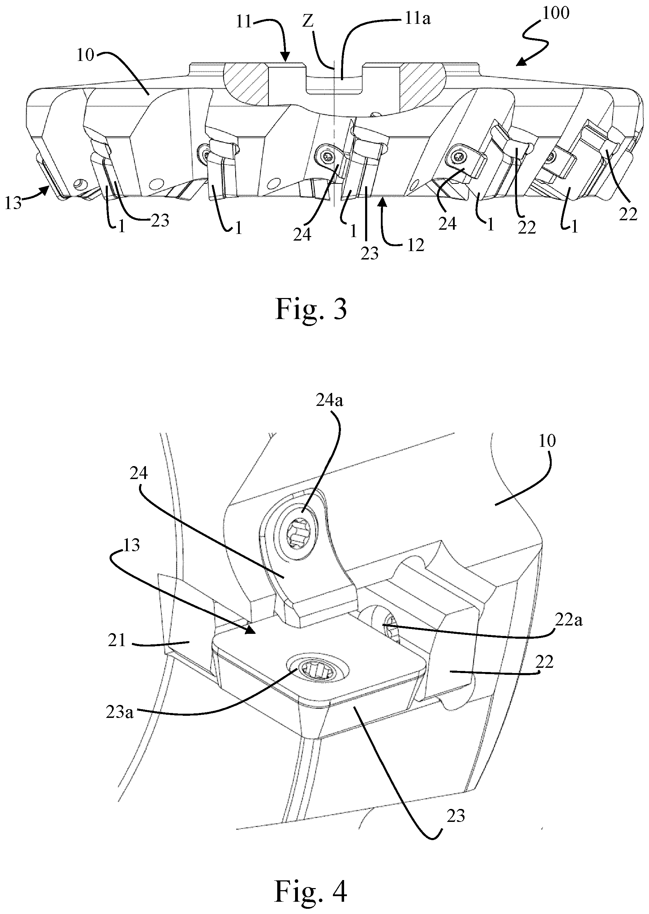

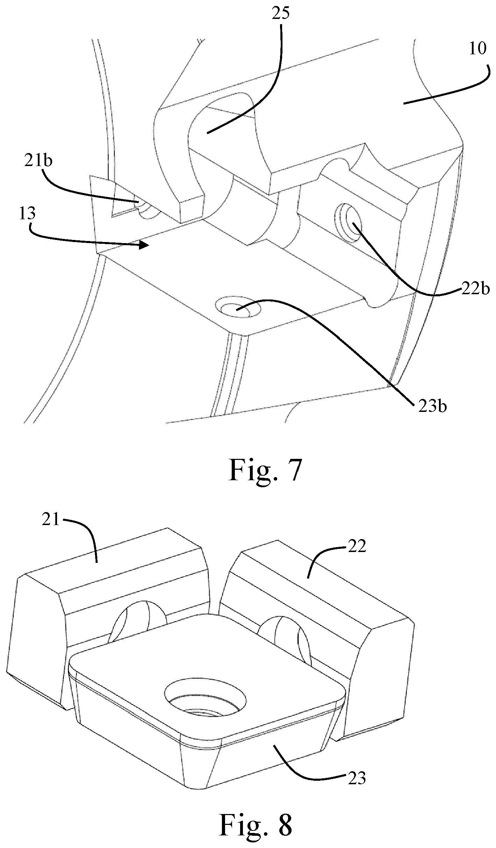

Wie insbesondere in der vergrößerten Detaildarstellung im Bereich eines Sitzes 13 in Fig. 4 zu sehen ist, ist im Bereich des Sitzes 13 ein erster Stützkörper 21 zur Abstützung einer ersten Seitenfläche des Schneideinsatzes 1 an dem Fräswerkzeuggrundkörper 10 angeordnet. Der erste Stützkörper 21 ist über ein erstes Befestigungselement 21a reversibel an dem Fräswerkzeuggrundkörper 10 befestigt. Bei dem Ausführungsbeispiel ist das erste Befestigungselement 21a als eine Schraube ausgebildet, die mit einem Gewindeabschnitt ein Durchgangsloch in dem ersten Stützkörper 21 durchgreift und in eine entsprechende in dem Fräswerkzeuggrundkörper 10 ausgebildete Gewindebohrung 21b eingreift, die in Fig. 7 zu sehen ist. Dabei stützt sich ein Kopf des ersten Befestigungselements 21a an der Innenwand des Durchgangslochs in dem ersten Stützkörper 21 ab, um diesen gegen den Fräswerkzeuggrundkörper 10 zu spannen. Der Kopf des ersten Befestigungselements 21a ist mit einem Eingriffsbereich für ein Schraubwerkzeug versehen, mit dem das erste Befestigungselement 21a betätigt werden kann. Obwohl beispielhaft eine bestimmte Ausgestaltung des Eingriffsbereichs dargestellt ist, kann diese auch in anderer Weise, z.B. in Form eines Innensechskants, eines Kreuzschlitzes, etc. ausgebildet sein.

Im Bereich des Sitzes 13 ist an dem Fräswerkzeuggrundkörper 10 ferner ein zweiter Stützkörper 22 zur Abstützung einer von der ersten Seitenfläche verschiedenen zweiten Seitenfläche des Schneideinsatzes 1 angeordnet. Der zweite Stützkörper 22 ist über ein zweites Befestigungselement 22a reversibel an dem Fräswerkzeuggrundkörper 10 befestigt. Bei dem Ausführungsbeispiel ist das zweite Befestigungselement 22a ebenfalls als eine Schraube ausgebildet, die mit einem Gewindeabschnitt ein Durchgangsloch in dem zweiten Stützkörper 22 durchgreift und in eine entsprechende in dem Fräswerkzeuggrundkörper 10 ausgebildete Gewindebohrung 22b eingreift, die in Fig. 7 zu sehen ist. Dabei stützt sich ein Kopf des zweiten Befestigungselements 22a an der Innenwand des Durchgangslochs in dem zweiten Stützkörper 22 ab, um diesen gegen den Fräswerkzeuggrundkörper 10 zu spannen. Der Kopf des zweiten Befestigungselements 22a ist mit einem Eingriffsbereich für ein Schraubwerkzeug versehen, mit dem das zweite Befestigungselement 22a betätigt werden kann. Bei der Ausführungsform ist der Eingriffsbereich des zweiten Befestigungselements 22a identisch zu dem des ersten Befestigungselements 21a ausgebildet, sodass zu deren Betätigung dasselbe Schraubwerkzeug verwendet werden kann.

An dem Fräswerkzeuggrundkörper 10 ist im Bereich des Sitzes 13 außerdem ein dritter Stützkörper 23 zur Abstützung einer Rückseite des Schneideinsatzes 1 angeordnet. Der dritte Stützkörper 23 ist über ein drittes Befestigungselement 23a reversibel an dem Fräswerkzeuggrundkörper 10 befestigt. Bei dem Ausführungsbeispiel ist das dritte Befestigungselement 23a ebenfalls als eine Schraube ausgebildet, die mit einem Gewindeabschnitt ein Durchgangsloch in dem dritten Stützkörper 23 durchgreift und in eine entsprechende in dem Fräswerkzeuggrundkörper 10 ausgebildete Gewindebohrung 23b eingreift, die in Fig. 7 zu sehen ist. Dabei stützt sich ein Kopf des dritten Befestigungselements 23a an der Innenwand des Durchgangslochs in dem dritten Stützkörper 23 ab, um diesen gegen den Fräswerkzeuggrundkörper 10 zu spannen. Der Kopf des dritten Befestigungselements 23a ist mit einem Eingriffsbereich für ein Schraubwerkzeug versehen, mit dem das dritte Befestigungselement 23a betätigt werden kann. Bei der Ausführungsform ist der Eingriffsbereich des dritten Befestigungselements 23a identisch zu dem des ersten Befestigungselements 21a und dem des zweiten Befestigungselements 22a ausgebildet, sodass zu deren Betätigung jeweils dasselbe Schraubwerkzeug verwendet werden kann.

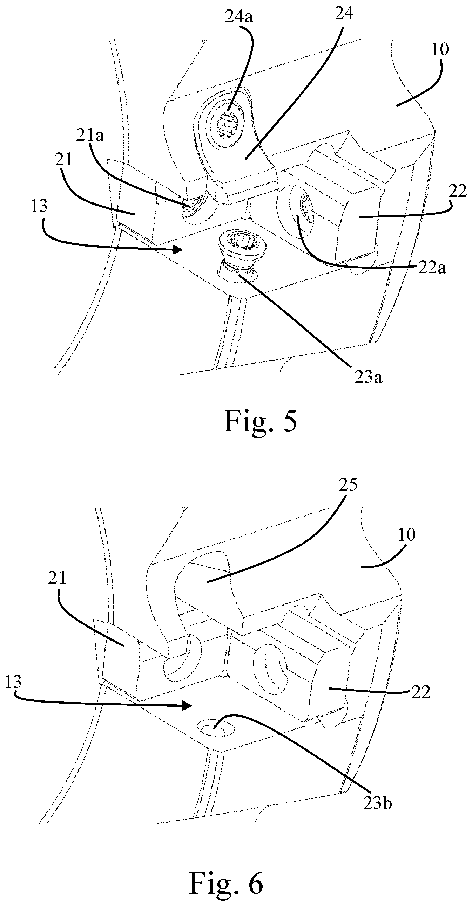

Der dritte Stützkörper 23 ist bei dem Ausführungsbeispiel als eine Unterlegplatte ausgebildet, die in ihrer Formgebung an die Form des Schneideinsatzes 1 derart angepasst ist, dass sie diesen an dem Sitz 13 im Wesentlichen vollflächig abstützt. Wie insbesondere in den Fig. 4, Fig. 8, Fig. 9 und Fig. 10 zu sehen ist, stützt sich der dritte Stützkörper 23 im befestigten Zustand sowohl an dem ersten Stützkörper 21 als auch an dem zweiten Stützkörper 22 ab. Die Gewindebohrung 23b für das dritte Befestigungselement 23a ist dabei gegenüber der Auflagefläche für den dritten Stützkörper 23 leicht schräg verkippt ausgebildet, wie in Fig. 5 zu erkennen ist, sodass der dritte Stützkörper 23 bei einem Anziehen des dritten Befestigungselements 23a in Richtung des ersten Stützkörpers 21 und in Richtung des zweiten Stützkörpers 22 gespannt wird. Die schräg verkippte Ausbildung dieser Gewindebohrung 23b ermöglicht außerdem eine gute Zugänglichkeit des Eingriffsbereichs des dritten Befestigungselements 23a zu dessen Betätigung.

Bei der Ausführungsform sind der erste Stützkörper 21 und der zweite Stützkörper 22 identisch ausgebildet, was zusätzlich die Handhabung erleichtert und sich positiv auf die Herstellkosten auswirkt.

Wie insbesondere in den Fig. 4, Fig. 5 und Fig. 9 zu sehen ist, ist im Bereich des Sitzes 13 ein Klemmkeil 24 angeordnet, der dazu ausgebildet ist, den Schneideinsatz 1 an dem Sitz 13 zu fixieren. Der Klemmkeil 24 ist in einer Ausnehmung 25 an dem Fräswerkzeuggrundkörper 10 geführt und kann über ein Schraubelement 24a betätigt werden, über das der Klemmkeil 24 an dem Fräswerkzeuggrundkörper 10 befestigt ist. Der Klemmkeil 24 besitzt als Gewindeabschnitt eine mit einem Innengewinde versehene Bohrung, in der ein oberer Schaftabschnitt des Schraubelements 24a aufgenommen ist, der mit einem ersten Gewindebereich versehen ist, das als ein entsprechendes Außengewinde ausgebildet ist. In dem Fräswerkzeuggrundkörper 10 ist als Gewindeabschnitt eine Gewindebohrung ausgebildet, in die ein unterer Schaftabschnitt des Schraubelements 24a mit einem zweiten Gewindebereich eingreift, das als ein entsprechendes Außengewinde ausgebildet ist. Um eine Bewegung des Klemmkeils 24 entlang einer Längsachse des Schraubelements 24a zu erzielen, wenn das Schraubelement 24a betätigt wird, sind der erste Gewindebereich und der zweite Gewindebereich des Schraubelements 24a mit unterschiedlichem Drehsinn des Gewindes ausgeführt, d.h. einer der beiden Gewindebereiche ist als Linksgewinde ausgebildet und der andere als Rechtsgewinde. Entsprechendes gilt für die jeweils mit dem ersten Gewindebereich und dem zweiten Gewindebereich zusammenwirkenden Gewindeabschnitte in dem Klemmkeil 24 und in dem Fräswerkzeuggrundkörper 10.

Eine Führungsfläche für den Klemmkeil 24 in der Ausnehmung 25 verläuft unter einem Winkel zu der Oberseite des dritten Stützkörpers 23, sodass sich der Klemmkeil 24 bei einem Anziehen des Schraubelements 24a dem dritten Stützkörper 23 nähert und somit den Schneideinsatz 1 fixieren kann. Das Fixieren des Schneideinsatzes 1 kann z.B. ausschließlich kraftschlüssig durch Ausüben einer Klemmkraft auf die Oberseite des Schneideinsatzes 1 erfolgen oder die dem Schneideinsatz 1 zugewandte Oberfläche des Klemmkeils 24 kann zusätzlich auch formschlüssig mit der Oberseite des Schneideinsatzes 1 zusammenwirken.

Bei der Ausführungsform ist das Schraubelement 24a zur Betätigung des Klemmkeils 24 mit einem Eingriffsbereich für ein Schraubwerkzeug versehen, das eine Betätigung mit demselben Schraubwerkzeug ermöglicht, das auch für die Befestigungselemente 21a, 22a und 23a verwendet werden kann, sodass eine besonders komfortable und einfache Bedienung ermöglicht ist.

Obwohl bei dem konkreten Ausführungsbeispiel die Bewegung des Klemmkeils 24 entlang der Längsachse des Schraubelements 24a über den unterschiedlichen Drehsinn des ersten und zweiten Gewindebereichs bereitgestellt wird, ist es z.B. auch möglich, den ersten und den zweiten Gewindebereich mit demselben Drehsinn zu versehen, aber eine unterschiedliche Gewindesteigung vorzusehen.

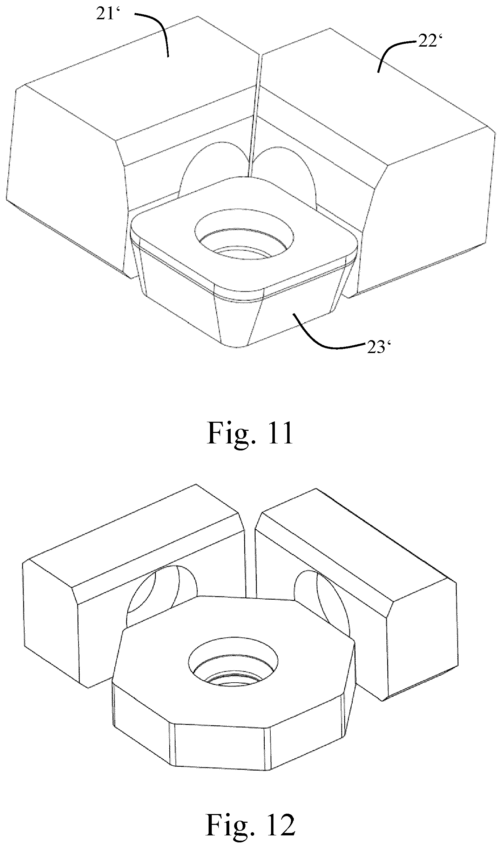

Wie in Fig. 11 zu erkennen ist, ist bei der Ausführungsform ferner zumindest ein weiterer Satz aus einem ersten Stützkörper 21', einem zweiten Stützkörper 22' und einem dritten Stützkörper 23' vorgesehen, der von dem zuvor beschriebenen ersten Satz aus erstem Stützkörper 21, zweitem Stützkörper 22 und drittem Stützkörper 23 verschieden ist. In dieser Weise kann das Fräswerkzeug in sehr einfacher und schneller Weise zur Aufnahme von Schneideinsätzen 1 mit unterschiedlichen Formen und/oder Abmessungen umgerüstet werden.

In Fig. 12 ist noch ein weiterer Satz aus einem ersten Stützkörper 21", einem zweiten Stützkörper 22" und einem dritten Stützkörper 23" vorgesehen, der von den zuvor beschriebenen Sätzen aus erstem, zweitem und drittem Stützkörper verschieden ist. Der in Fig. 12 schematisch dargestellte Satz ist zur Anpassung des Sitzes zur Aufnahme eines auswechselbaren Schneideinsatzes mit im Wesentlichen oktogonaler Form ausgebildet.

Wie insbesondere in Fig. 7 zu sehen ist, weist der Sitz 13 in dem Fräswerkzeuggrundkörper 10 eine Formgebung auf, die vollständig durch Wälzfräsen aus einer Richtung hergestellt ist.

## Patentansprüche

1. Fräswerkzeug (100) mit einem Fräswerkzeuggrundkörper (10),
der ein erstes Ende (11), das eine Schnittstelle zur Verbindung mit einer maschinenseitigen Werkzeugaufnahme aufweist, und ein freies zweites Ende (12), das zumindest einen Sitz (13) zur Aufnahme eines auswechselbaren Schneideinsatzes (1) aufweist, hat,
wobei im Bereich des Sitzes ein Klemmkeil (24) zum Ausüben einer Klemmkraft auf eine Oberseite des Schneideinsatzes (1) angeordnet ist,
wobei an dem Sitz (13) angeordnet sind:
ein erster Stützkörper (21) zur Abstützung einer ersten Seitenfläche des Schneideinsatzes (1), der über ein erstes Befestigungselement (21a) reversibel an dem Fräswerkzeuggrundkörper (10) befestigt ist,
**gekennzeichnet durch** einen zweiten Stützkörper (22) zur Abstützung einer von der ersten Seitenfläche verschiedenen zweiten Seitenfläche des Schneideinsatzes (1), der über ein zweites Befestigungselement (22a) reversibel an dem Fräswerkzeuggrundkörper (10) befestigt ist, und
einen dritten Stützkörper (23) zur Abstützung einer Unterseite des Schneideinsatzes (1), der über ein drittes Befestigungselement (23a) reversibel an dem Fräswerkzeuggrundkörper (10) befestigt ist.

2. Fräswerkzeug nach Anspruch 1, wobei das erste, das zweite und das dritte Befestigungselement (21a**,** 22a, 23a) jeweils als Schrauben ausgebildet sind.

3. Fräswerkzeug nach Anspruch 1 oder Anspruch 2, wobei das erste, das zweite und das dritte Befestigungselement (21a, 22a, 23a) jeweils mit einem Eingriffsbereich für ein Schraubwerkzeug ausgebildet sind und die Eingriffsbereiche für einen Eingriff mit demselben Schraubwerkzeug ausgelegt sind.

4. Fräswerkzeug nach einem der vorangehenden Ansprüche, wobei der Klemmkeil (24) über ein Schraubelement (24a) mit dem Fräswerkzeuggrundkörper (10) verbunden ist.

5. Fräswerkzeug nach Anspruch 4, wobei das Schraubelement (24a) einen ersten Gewindebereich, der mit einem Gewindeabschnitt in dem Klemmkeil (24) zusammenwirkt, und einen zweiten Gewindebereich, der mit einem Gewindeabschnitt in dem Fräswerkzeuggrundkörper (10) zusammenwirkt, hat.

6. Fräswerkzeug nach Anspruch 5, wobei der erste Gewindebereich und der zweite Gewindebereich des Schraubelements (24a) in dem Drehsinn des Gewindes und/oder der Gewindesteigung voneinander verschieden sind.

7. Fräswerkzeug nach einem der vorangehenden Ansprüche, wobei sich der dritte Stützkörper (23) seitlich an dem ersten Stützkörper (21) und an dem zweiten Stützkörper (22) jeweils abstützt.

8. Fräswerkzeug nach einem der vorangehenden Ansprüche, wobei das dritte Befestigungselement (23a) derart schräg angeordnet ist, dass der dritte Stützkörper (23) in Richtung des ersten Stützkörpers (21) und in Richtung des zweiten Stützkörpers (22) gespannt ist.

9. Fräswerkzeug nach einem der vorangehenden Ansprüche, wobei ein erster Satz aus einem ersten Stützkörper (21), einem zweiten Stützkörper (22) und einem dritten Stützkörper (23) und zumindest ein weiterer, von dem ersten Satz verschiedener Satz aus einem ersten Stützkörper (21'), einem zweiten Stützkörper (22') und einem dritten Stützkörper (23') zur Anpassung des Sitzes (13) zur Aufnahme verschiedener Schneideinsätze vorgesehen sind.

10. Fräswerkzeug nach einem der vorangehenden Ansprüche, wobei an dem zweiten Ende (12) eine Mehrzahl von über den Umfang des Fräswerkzeuggrundkörpers (10) verteilten Sitzen (13) zur Aufnahme von auswechselbaren Schneideinsätzen (1) vorgesehen ist.

11. Fräswerkzeug nach einem der vorangehenden Ansprüche, wobei der erste Stützkörper (21) und der zweite Stützkörper (22) identisch ausgebildet sind.

12. Fräswerkzeug nach einem der vorangehenden Ansprüche, wobei der Sitz (13) an dem Fräswerkzeuggrundkörper (10) vollständig durch Wälzfräsen aus einer Bearbeitungsrichtung erzeugt ist.

## Claims

1. A milling tool (100) comprising a milling tool main body (10) having a first end (11), which comprises an interface for connection to a machine-side tool holder, and a free second end (12), which comprises at least one seat (13) for receiving an exchangeable cutting insert (1), wherein a clamping wedge (24) for exerting a clamping force on an upper side of the cutting insert (1) is arranged in the region of the seat, wherein the following are arranged at the seat (13): a first support member (21) for supporting a first side face of the cutting insert (1), which is reversibly fastened to the milling tool main body (10) by means of a first fastening element (21a), **characterised by** a second support member (22) for supporting a second side face of the cutting insert (1), which differs from the first side face and which is reversibly fastened to the milling tool main body (10) by means of a second fastening element (22a), and a third support member (23) for supporting an underside of the cutting insert (1), which is reversibly fastened to the milling tool main body (10) by means of a third fastening element (23a).

2. The milling tool according to claim 1, wherein the first, second and third fastening elements (21a, 21b, 21c) are each configured as screws.

3. The milling tool according to claim 1 or claim 2, wherein the first, second and third fastening elements (21a, 21b, 21c) are each provided with an engagement region for a screw-driving tool, and the engagement regions are configured for engagement with the same screw-driving tool.

4. The milling tool according to any one of the preceding claims, wherein the clamping wedge (24) is connected to the milling tool main body (10) by means of a screw element (24a).

5. The milling tool according to claim 4, wherein the screw element (24a) has a first threaded region, which interacts with a threaded portion in the clamping wedge (24), and a second threaded region, which interacts with a threaded portion in the milling tool main body (10).

6. The milling tool according to claim 5, wherein the first threaded region and the second threaded region of the screw element (24a) differ from one another in the direction of rotation of the thread and/or the thread pitch.

7. The milling tool according to any one of the preceding claims, wherein the third support member (23) is laterally supported on each of the first support member (21) and the second support member (22).

8. The milling tool according to any one of the preceding claims, wherein the third fastening element (23a) is arranged obliquely in such a manner that the third support member (23) is tensioned in the direction of the first support member (21) and in the direction of the second support member (22).

9. The milling tool according to any one of the preceding claims, wherein a first set comprising a first support member (21), a second support member (22) and a third support member (23), and at least one further set, which differs from the first set, comprising a first support member (21'), a second support member (22') and a third support member (23'), are provided for adapting the seat (13) to receive different cutting inserts.

10. The milling tool according to any one of the preceding claims, wherein a plurality of seats (13), distributed over the circumference of the milling tool main body (10), for receiving exchangeable cutting inserts (1) are provided at the second end (12).

11. The milling tool according to any one of the preceding claims, wherein the first support member (21) and the second support member (22) are of identical design.

12. The milling tool according to any one of the preceding claims, wherein the seat (13) on the milling tool main body (10) is produced entirely by hobbing from one machining direction.

## Revendications

1. Outil de fraisage (100) comprenant un corps de base d'outil de fraisage (10), qui présente une première extrémité (11), laquelle présente une interface destinée à être reliée à un porte-outil côté machine, et une seconde extrémité libre (12), laquelle présente au moins un logement (13) destiné à recevoir une plaquette de coupe amovible (1), dans lequel un coin de serrage (24) destiné à exercer une force de serrage sur une face supérieure de la plaquette de coupe (1) est disposé dans la région du logement, dans lequel sont disposés sur le logement (13) : un premier corps d'appui (21) destiné à supporter une première face latérale de la plaquette de coupe (1), lequel est fixé de manière réversible au corps de base d'outil de fraisage (10) au moyen d'un premier élément de fixation (21a), **caractérisé par** un deuxième corps d'appui (22) destiné à supporter une deuxième face latérale de la plaquette de coupe (1), différente de la première face latérale, lequel est fixé de manière réversible au corps de base d'outil de fraisage (10) au moyen d'un deuxième élément de fixation (22a), et un troisième corps d'appui (23) destiné à supporter une face inférieure de la plaquette de coupe (1), lequel est fixé de manière réversible au corps de base d'outil de fraisage (10) au moyen d'un troisième élément de fixation (23a).

2. Outil de fraisage selon la revendication 1, dans lequel les premier, deuxième et troisième éléments de fixation (21a, 21b, 21c) sont chacun réalisés sous la forme de vis.

3. Outil de fraisage selon la revendication 1 ou la revendication 2, dans lequel les premier, deuxième et troisième éléments de fixation (21a, 21b, 21c) sont chacun pourvus d'une zone de prise destinée à un outil de vissage, et les zones de prise sont conçues pour venir en prise avec le même outil de vissage.

4. Outil de fraisage selon l'une quelconque des revendications précédentes, dans lequel le coin de serrage (24) est relié au corps de base d'outil de fraisage (10) au moyen d'un élément de vissage (24a).

5. Outil de fraisage selon la revendication 4, dans lequel l'élément de vissage (24a) présente une première région filetée, qui coopère avec une portion filetée dans le coin de serrage (24), et une deuxième région filetée, qui coopère avec une portion filetée dans le corps de base d'outil de fraisage (10).

6. Outil de fraisage selon la revendication 5, dans lequel la première région filetée et la deuxième région filetée de l'élément de vissage (24a) diffèrent l'une de l'autre par le sens de rotation du filetage et/ou le pas de filetage.

7. Outil de fraisage selon l'une quelconque des revendications précédentes, dans lequel le troisième corps d'appui (23) s'appuie latéralement à la fois sur le premier corps d'appui (21) et sur le deuxième corps d'appui (22).

8. Outil de fraisage selon l'une quelconque des revendications précédentes, dans lequel le troisième élément de fixation (23a) est disposé obliquement de telle sorte que le troisième corps d'appui (23) est serré en direction du premier corps d'appui (21) et en direction du deuxième corps d'appui (22).

9. Outil de fraisage selon l'une quelconque des revendications précédentes, dans lequel un premier jeu comprenant un premier corps d'appui (21), un deuxième corps d'appui (22) et un troisième corps d'appui (23), ainsi qu'au moins un autre jeu, différent du premier jeu, comprenant un premier corps d'appui (21'), un deuxième corps d'appui (22') et un troisième corps d'appui (23'), sont prévus pour adapter le logement (13) à la réception de différentes plaquettes de coupe.

10. Outil de fraisage selon l'une quelconque des revendications précédentes, dans lequel une pluralité de logements (13), répartis sur la circonférence du corps de base d'outil de fraisage (10), destinés à recevoir des plaquettes de coupe amovibles (1), sont prévus au niveau de la seconde extrémité (12).

11. Outil de fraisage selon l'une quelconque des revendications précédentes, dans lequel le premier corps d'appui (21) et le deuxième corps d'appui (22) sont de conception identique.

12. Outil de fraisage selon l'une quelconque des revendications précédentes, dans lequel le logement (13) sur le corps de base d'outil de fraisage (10) est réalisé entièrement par taillage par fraise-mère à partir d'une direction d'usinage.
